Europäisches Patentamt

European Patent Office

Office européen des brevets

(19)

(11) Veröffentlichungsnummer: **0 015 323**
**B1**

(12) # EUROPÄISCHE PATENTSCHRIFT

(45) Veröffentlichungstag der Patentschrift:
24.03.82

(21) Anmeldenummer: 79200603.3

(22) Anmeldetag: 19.10.79

(51) Int. Cl.³: **G 01 G 3/12,** G 01 G 21/24

(54) **Plattformwaage.**

(30) Priorität: 08.03.79 DE 2909068

(43) Veröffentlichungstag der Anmeldung:
17.09.80 Patentblatt 80/19

(45) Bekanntmachung des Hinweises auf die Patenterteilung:
24.03.82 Patentblatt 82/12

(84) Benannte Vertragsstaaten:
AT CH NL

(56) Entgegenhaltungen:
CH-A-449 993
DE-A-2 622 586
DE-A-2 710 893
DE-A-2 830 071
DE-B-1 261 330
DE-B-1 549 161
DE-B-2 504 992
DE-B-2 528 426
FR-A-1 532 022

(73) Patentinhaber: **CARL SCHENCK AG,**
**Landwehrstrasse 55 Postfach 40 18, D-6100 Darmstadt**
**(DE)**

(72) Erfinder: **Müller, Norbert, Grundstrasse 15,**
**D-6100 Darmstadt (DE)**
Erfinder: **Törner, Ludger, Ketteler Strasse 23,**
**D-6116 Eppertshausen (DE)**

(74) Vertreter: **Brand, Fritz, Dipl.-Ing., Carl Schenck AG**
**Patentabteilung Landwehrstrasse 55 Postfach 4018,**
**D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Plattformwaage

Die Erfindung betrifft eine Plattformwaage mit einem Grundrahmen und einer Wägeplattform mit vertikaler Parallelführung und Abstützung auf zwei vom Grundrahmen getragenen Wägezellen.

Bei einer aus der DE-A 27 10 893 bekannten Waage mit Abstützung auf Wägezellen, einer sogenannten elektromechanischen Waage, sind vier Wägezellen vorgesehen, die an den Ecken der rechteckigen oder quadratischen Plattform angeordnet sind. Solche Waagenausführungen erfordern wegen der vier Wägezellen einen erheblichen mess- und schaltungstechnischen Aufwand und sind daher, insbesondere für kleinere und mittlere Waagengrössen, teuer. Technisch nachteilig ist bei diesen Waagen die statisch unbestimmte Lagerung.

Bisher bekannte Wägeeinrichtungen mit zwei Wägezellen (z.B. DE-B 12 61 330) sind aus unterschiedlichen Gründen nicht für Plattformwaagen geeignet bzw. zu ungenau. Aus der DE-A 26 22 586 ist eine Wägeeinrichtung mit zwei Wägezellen bekannt, mit der im wesentlichen in einer Dimension ausgedehnte Gegenstände wie Kernbrennstoff-Brennelemente gewogen werden können. Dazu werden zwei mit den Wägezellen verbundene Auflager parallelgeführt. Für Belastungen ausserhalb der Verbindungsachse der beiden Wägezellen ist diese Wägeeinrichtung nicht geeignet.

Wägeeinrichtungen, wie sie aus der DE-B 25 04 992 bekannt sind, mit einer Wägezelle und blattfederartigen Parallelführungen sind im allgemeinen auf kleine Waagengrössen beschränkt. Bei aussermittiger Belastung kann die Parallelführung auch auf Torsion beansprucht werden und damit nicht erfassbare Fehler verursachen, die die Empfindlichkeit und Genauigkeit der Waage herabsetzen.

Ferner ist eine sogenannte elektromechanische Hybridwaage z.B. aus der DE-B 25 28 426 bekannt, bei der die Belastung über Hebel auf eine Wägezelle übertragen wird. Solche Waagen weisen jedoch die allgemein bekannten Nachteile von Hebelwaagen auf.

In der DE-A 28 30 071 wird vorgesehen, eine Wägebrücke in einer Achse auf zwei Messdosen abzustützen und die andere Achse durch ein querstabilisatorähnliches Element in vertikaler Richtung parallel zu führen.

Aufgabe der vorliegenden Erfindung ist es, eine Plattformwaage in flacher Bauweise zu schaffen, die möglichst einfach aufgebaut und damit möglichst preiswert ist und doch hohen Genauigkeitsanforderungen genügt, wobei Eichfähigkeit angestrebt wird. Die Fehler, die durch Führungen für die Wägeplattform entstehen, sollen ausgeschaltet bzw. auf ein Mindestmass reduziert werden. Weiterhin soll die Plattformwaage als Montageeinheit transportfähig und möglichst wartungsfrei sein.

Diese Aufgabe wird mit den im Kennzeichen des Anspruchs 1 angegebenen Merkmalen gelöst, wobei die Unteransprüche Ausgestaltungen der Erfindung enthalten.

Es hat sich gezeigt, dass bei der erfindungsgemässen Plattformwaage trotz des verhältnismässig einfachen Aufbaus, insbesondere bei mittleren Waagengrössen (für Belastungen zwischen etwa 100 und 3000 kg), überraschend hohe Genauigkeiten erzielbar sind. Dies ist darauf zurückzuführen, dass die lastübertragenden Bauteile (Wägebalken, Wägezellen) so ausgebildet und angeordnet sind (Wägebalken dreh- und biegesteif, Wägezellen mit kleinen Messwegen) dass die Blattfedern für die Parallelführung bei aussermittiger Belastung praktisch nur auf Zug und Druck beansprucht werden. Die vertikale Parallelführung der Wägeplattform wird bei der erfindungsgemässen Waage bewirkt durch zwei verschiedene konstruktive Anordnungen. Eine Achse der Wägeplattform wird über den Wägebalken durch die beiden Wägezellen, die andere durch die Blattfedern parallel geführt. Die eindeutig definierten Beanspruchungsverhältnisse, insbesondere der Blattfedern, bringen, wie Versuche ergeben haben, eine unerwartete Genauigkeit und Empfindlichkeit der Waage.

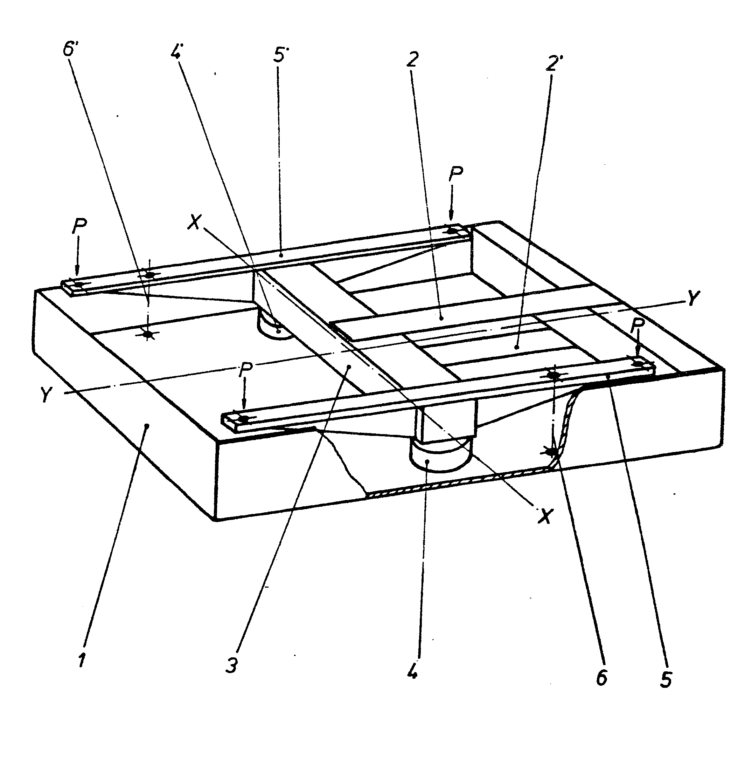

Die Erfindung wird nachstehend an einem Ausführungsbeispiel in der Zeichnung schematisch dargestellt und näher erläutert.

Die Waage besteht aus einem Waagenuntergestell, das als nach oben offener, stabiler Kasten ausgeführt ist und den Grundrahmen 1 der Waage bildet. Der Grundrahmen kann eine quadratische oder rechteckige Form aufweisen. Am Grundrahmen 1 ist ein Blattfederpaar 2, 2' beispielsweise durch Verschrauben befestigt. An der Stelle bzw. an der Rahmenseite, an der die Blattfedern 2, 2' angeordnet sind, kann der Grundrahmen verstärkt ausgeführt sein, so dass die von den Blattfedern eingeleiteten horizontalen Zug- und Druckkräfte ohne grosse Verformungen vom Rahmen aufgenommen werden. Das Blattfederpaar ist in einer Achse der Waage angeordnet (im dargestellten Beispiel in der y-Achse). Da die Blattfedern nur Zug- und Druckkräfte aufzunehmen haben, können sie verhältnismässig schmal ausgeführt werden. Die Blattfedern können Gelenkstellen mit kleinerem Querschnitt aufweisen. Es können auch andere Ausführungen und Anordnungen von Blattfedern vorgesehen werden.

Die beweglichen Enden der Blattfedern 2, 2' sind an einem verdreh- und biegesteifen Wägebalken 3 befestigt, der (wie dargestellt) beispielsweise einen rechteckigen Querschnitt aufweist und hohl ausgeführt sein kann, sodass bei Biege- und Verdrehbeanspruchungen durch die Belastung der Wägeplattform nur sehr geringe Verformungen auftreten. Die Längsachse des Wägebalkens 3 bildet mit der Längsachse der Blattfedern 2, 2' einen rechten Winkel. Die zweite Achse (x-Achse) der Waage und die Längsachse des Wägebalkens 3 liegen in der gleichen vertikalen Ebene bzw. fallen zusammen. Die Blattfedern 2, 2' sind beispielsweise durch nicht dargestellte Schraubverbindungen am Wägebalken befestigt. Die Schraubverbindungen für die Blattfedern am Wägebalken 3 und am Grundrahmen 1 können einstellbar ausgeführt sein, z.B. durch Beilegscheiben, die zwischen Blattfedern und Wägebalken bzw. Rahmen gelegt werden. Dadurch kann der vertikale Abstand zwischen den beiden Blattfedern verändert werden. Auf diese Weise ist es möglich, die Parallelführung zu justieren.

Der Wägebalken 3 liegt in vertikaler Richtung beweglich innerhalb des Grundrahmens 1. Seine Länge entspricht etwa der lichten Weite des Grundrahmens. An seinen Enden ist der Wägebalken 3 auf zwei fest mit dem Grundrahmen 1 verbundenen Wägezellen 4, 4' abgestützt. Die Wägezellen sind hierbei so geschaltet, dass die Summe ihrer Ausgangssignale das Messergebnis darstellt. An der Oberseite des Wägebalkens 3 sind Querträger oder Versteifungen 5, 5' angeordnet. Die aus Gründen der Übersichtlichkeit nicht dargestellte Wägeplattform ist am Wägebalken 3 und an den Versteifungen 5, 5' so befestigt, dass Plattform und Wägebalken als Einheit vertikal beweglich sind. Die Wägeplattform weist etwa die gleiche Grundfläche wie der Grundrahmen auf.

Bei Plattformwaagen kann die Belastung an einer beliebigen Stelle der Wägeplattform auf die Waage einwirken. Im allgemeinen wird man zwar bestrebt sein, die Belastung möglichst in der Mitte der Waage im Schnittpunkt der Waagenachsen (x- und y-Achse) aufzubringen. Eine aussermittig einwirkende Belastung darf jedoch keine unzulässig grossen Fehler verursachen. Bei dem in der Zeichnung dargestellten Ausführungsbeispiel wird eine in der x-Achse an einer beliebigen Stelle der Achse wirkende Last über den Wägebalken 3 auf die Wägezellen 4, 4' übertragen. Da die Wägezellen auch bei maximaler Belastung nur sehr kleine Messwege in der Grössenordnung von Zehntel Millimetern ausführen, ergibt sich selbst bei starker aussermittiger Belastung praktisch keine Schrägstellung des Wägebalkens 3. Damit wird eine störende und das Messergebnis beeinträchtigende Verdrehung der Blattfedern 2, 2' vermieden.

Bei Belastungen, die ausserhalb der x-Achse in der y-Achse einwirken, entsteht an dem nur in vertikaler Richtung abgestützten Wägebalken 3 ein Moment um die x-Achse, das durch das horizontal angeordnete Blattfederpaar 2, 2' aufgenommen wird. Da durch die beschriebene Abstützung des Wägebalkens 3 die Blattfedern 2, 2' nicht verdreht werden, treten an den Federn praktisch nur reine Zug- und Druckbeanspruchungen auf. Dies ist auch dann der Fall, wenn die Last ausserhalb der Plattformachsen aufgebracht wird und beispielsweise an einem der mit P bezeichneten Punkte auf die Wägeplattform einwirkt.

Die Wägeplattform kann beispielsweise durch Verschrauben an den Punkten 6, 6' am Grundrahmen 1 arretiert werden. Dadurch ergibt sich eine kompakte Montage- oder Transporteinheit ohne bewegliche Teile.

**Patentansprüche**

1. Plattformwaage mit einem Grundrahmen (1) und einer Wägeplattform mit vertikaler Parallelführung und Abstützung auf zwei vom Grundrahmen getragenen Wägezellen (4, 4'), gekennzeichnet durch die Vereinigung folgender Merkmale:
– die Wägeplattform ist fest mit einem verdreh- und biegesteifen Wägebalken (3) verbunden, der unterhalb der Plattform in einer parallel zur Plattform verlaufenden ersten Waagenachse (x-Achse) angeordnet ist,
– der Wägebalken (3) liegt an seinen Enden auf den nur kleine Messwege in der Grössenordnung von Zehntel Millimetern ausführenden Wägezellen (4, 4') auf,
– die Parallelführung weist Blattfedern (2, 2') auf, die mit einem Ende am Wägebalken (3) und dem anderen Ende am Grundrahmen (1) befestigt sind, und die sich in Richtung einer zweiten Waagenachse (y-Achse) erstrecken, welche ebenfalls parallel zur Wägeplattform und senkrecht zur ersten Waagenachse (x-Achse) verläuft.

2. Plattformwaage nach Anspruch 1, dadurch gekennzeichnet, dass die Blattfedern (2, 2') aus einem in der zweiten Waagenachse (y-Achse) bzw. in der Mitte des Wägebalkens (3) angeordneten Blattfederpaar bestehen.

3. Plattformwaage nach Anspruch 2, dadurch gekennzeichnet, dass die Blattfedern (2, 2') schmal sind im Verhältnis zu den Abmessungen der Wägeplattform.

4. Plattformwaage nach Anspruch 1, dadurch gekennzeichnet, dass der Abstand der Blattfedern (2, 2') voneinander am Grundrahmen (1) und/oder Wägebalken (3) einstellbar ist.

5. Plattformwaage nach Anspruch 1, dadurch gekennzeichnet, dass die Wägeplattform gegenüber dem Grundrahmen (1) arretierbar ist.

**Revendications**

1. Pont à bascule comprenant un cadre de base (1) et une plate-forme de pesage comportant un dispositif de guidage parallèle vertical et un dispositif d'appui sur deux cellules de pesage (4, 4') supportées par le cadre de base, caractérisé par la réunion des caractéristiques suivantes:
– la plate-forme de pesage est solidaire d'un fléau (3) résistant à la torsion et à la flexion qui est disposé en dessous de la plate-forme selon un premier axe horizontal (axe X) parallèle à la plate-forme;
– le fléau (3) s'appuie par ses extrémités sur les cellules de pesage (4, 4') qui n'effectuent que de petits parcours de mesure de l'ordre de grandeur du dixième de millimètre;
– le dispositif de guidage parallèle comprend des ressorts à lames (2, 2') qui sont fixés par une extrémité au fléau (3) et par l'autre extrémité au cadre de la base (1), et qui s'étendent dans la direction d'un second axe horizontal (axe Y) qui est également parallèle à la plate-forme de pesage et perpendiculaire au premier axe horizontal (axe X).

2. Pont à bascule selon la revendication 1, caractérisé en ce que les ressorts à lames (2, 2') sont constitués par une paire de ressorts à lames disposés dans le second axe horizontal (axe Y) ou au milieu du fléau (3).

3. Pont à bascule selon la revendication 2, caractérisé en ce que les ressorts à lames (2, 2') sont étroits par rapport aux dimensions de la plate forme de pesage.

4. Pont à bascule selon la revendication 1, caractérisé en ce que la distance séparant les ressorts à lames (2, 2') peut être réglée sur le cadre de base (1) et/ou sur le fléau (3).

5. Pont à bascule selon la revendication 1, caractérisé en ce que la plate-forme de pesage peut être bloquée par rapport du cadre de base (1).

## Claims

1. A platform weighing machine having a support base (1) and a weighing platform with vertical and parallel guides and supported on two weighing cells (4, 4') carried by the support base, characterised by combining the following features:
   - the weighing platform is firmly connected to a torsionally and flexurally stiff weighing beam (3) which is arranged beneath the platform in a first weighing axis (x-axis) which runs parallel to the platform,
   - at its ends the weighing beam (3) lies on the weighing cells (4, 4') which only cover small measurement paths of the order of magnitude of tenths of millimetres,
   - the parallel guides exhibit flat springs (2, 2') which latter are fixed at one end to the weighing beam (3) and at the other end to the support base (1) and which extend along a second weighing axis (y-axis), the y-axis running parallel to the weighing platform and perpendicular to the first weighing axis (x-axis)

2. A platform weighing machine according to claim 1, characterised in that the flat springs (2,2') comprise a pair of flat springs arranged in the second weighing axis (y-axis) or in the centre of the weighing beam (3).

3. A platform weighing machine according to claim 2, characterised in that the flat springs (2, 2') are narrow in relation to the dimensions of the weighing platform.

4. A platform weighing machine according to claim 1, characterised in that the spacing of the flat springs (2, 2') from each other on the support base (1) and/or the weighing beam (3) can be adjusted.

5. A platform weighing machine according to claim 1, characterised in that the weighing platform can be locked with respect to the support base (1).